# DEMANDE DE BREVET EUROPEEN

(11) **EP 3 189 954 A1**
(43) Date de publication de la demande: **12.07.2017**
(21) Numéro de dépôt: 16150493.1
(22) Date de dépôt: 07.01.2016
(51) Int. Cl.: B29C 47/04, B29C 47/12, B29C 47/02, B29C 47/28, B29L 31/00, A44C 5/00

(54) **BRACELET ET SON PROCÉDÉ DE FABRICATION**

(71) Demandeur: The Swatch Group Research and Development Ltd., 2074 Marin (CH)
(72) Inventeur: Rannoux, Claire, 1003 Lausanne (CH); François, Nicolas, 2000 Neuchâtel (CH); Célérier, Yannick, 71510 Aluze (FR); Blanc Petiot, Catherine, 71380 Saint-Marcel (FR); Lafin, Benoît, 71370 Saint-Christophe-en Bresse (FR)
(74) Mandataire: Ravenel, Thierry Gérard Louis

(57) **Abrégé**

La présente invention se rapporte à un procédé de fabrication d'un bracelet (4) de montre (3) ou de bijou comportant les étapes de :
- mise à disposition d'un premier matériau synthétique,
- mise à disposition d'une ligne d'extrusion (1) avec une filière (2) pour fabriquer un extrudat (6) à partir du premier matériau,
caractérisé en ce qu'il comporte en outre une ou plusieurs des étapes suivantes :
- mise à disposition d'un ou plusieurs matériaux additionnels se distinguant du premier matériau par leur couleur et/ou leurs propriétés,
- mise à disposition d'une filière (2) ayant un profil particulier sélectionné parmi un profil circulaire, un profil ovale, un profil bombé et un profil avec des zones en saillie (5).

## Description

### OBJET DE L'INVENTION

La présente invention se rapporte au domaine de l'horlogerie et de la bijouterie. Plus particulièrement, elle se rapporte à un procédé d'extrusion ou de co-extrusion pour réaliser des bracelets ou des bijoux fantaisies et aux bracelets ou bijoux fantaisies obtenus par ce procédé.

### ARRIÈRE-PLAN TECHNOLOGIQUE ET ÉTAT DE LA TECHNIQUE

Aujourd'hui, les bracelets de montres ou les bijoux fantaisies en plastique sont essentiellement fabriqués par moulage soit par injection, soit par compression. Ces procédés permettent la fabrication rapide de grandes séries de ce type d'objets en matière plastique avec des formes complexes. Ils présentent cependant comme désavantage de nécessiter un outillage coûteux, d'autant plus coûteux que l'objet est complexe. En outre, si on souhaite obtenir des bracelets ou des bijoux fantaisies avec différentes couleurs ou matières dans la masse, il est nécessaire d'avoir recours à plusieurs étapes de surmoulage ou de bi-injection. Par la suite, nous ne parlerons que de bracelets de montre, mais uniquement à titre d'exemple et sans limitation à d'autres objets portables ou non réalisables avec cette technique.

Dans le passé, il a été proposé de réaliser des bracelets de montre par un procédé d'extrusion, qui est un procédé moins coûteux. Ainsi, le document FR 2 121 864 divulgue un procédé de fabrication d'une bande plastique présentant aux extrémités latérales des canaux cylindriques destinés à recevoir les tiges de support du boîtier de montre.

La fabrication de bracelets par extrusion s'est limitée à la fabrication de bracelets de forme simple, unicolores et réalisés dans un même matériau. Or, les bracelets présentant un relief, des couleurs différentes ou un toucher particulier sont très prisés par les clients. Outre les aspects esthétiques, il peut également être intéressant d'intégrer divers matériaux au sein du bracelet afin de modifier les propriétés fonctionnelles du bracelet, comme par exemple accroître la rigidité à certains endroits précis du bracelet, qui sont plus sollicités mécaniquement. Il est aussi possible de réaliser une surface avec un toucher agréable, et une partie inférieure confortable, par exemple limitant la transpiration, pour être en contact permanent avec la peau.

### RÉSUMÉ DE L'INVENTION

La présente invention a pour objet de réaliser des bracelets présentant des géométries et motifs originaux à l'aide d'un procédé simple et peu coûteux. La présente invention vise en outre à réaliser des bracelets avec des propriétés fonctionnelles variables, comme par exemple présentant des renforts localisés à certains endroits précis.

A cette fin, un procédé de fabrication selon la revendication 1 annexée est proposé et des formes d'exécution particulières sont reprises dans les revendications dépendantes.

### BRÈVE DESCRIPTION DES FIGURES

Les caractéristiques et avantages de la présente invention apparaîtront à la lecture de la description détaillée ci-dessous faisant référence aux figures suivantes.
La figure 1 représente une vue schématique d'une ligne d'extrusion connue en soi.
Les figures 2a et 2b représentent une vue en perspective de bracelets fabriqués avec le procédé d'extrusion selon l'invention. Les bracelets selon ce mode de réalisation forment respectivement un tube à la figure 2a et une bande bombée à la figure 2b.
Les figures 3 et 4 représentent des vues en perspective de montres avec un bracelet fabriqué selon le procédé d'extrusion de l'invention. Les bracelets présentent des zones en relief séparées par des creusures.
La figure 5 représente une vue schématique de deux extrudats issus de la filière. Selon l'invention, le bracelet est extrudé dans le sens transversal du bracelet. La figure 6 représente une vue en perspective de ces mêmes extrudats avec à une ou à chaque extrémité latérale une structure tubulaire creuse.
La figure 7 représente une vue schématique des extrudeuses en amont de la filière de co-extrusion. Les figures 8 et 9 présentent une vue du dessus des bracelets ainsi obtenus avec des rayures transversales et longitudinales respectivement.
La figure 10 représente une vue en perspective de l'extrudat issu du procédé selon l'invention. Il comporte au niveau de ses extrémités latérales une matière plastique distincte de celle disposée au centre.
La figure 11 représente une vue partielle en perspective de l'extrudat issu du procédé selon l'invention avec un renfort intégré au niveau des extrémités latérales.
La figure 12 représente une vue partielle en perspective d'une montre avec un bracelet obtenu selon le procédé de l'invention et fixé au boîtier avec une construction de type NATO.
La figure 13 représente une vue en perspective d'une montre avec un bracelet obtenu selon le procédé de l'invention, avec fermeture par un système à clous.
La figure 14 représente un brin du bracelet issu d'un extrudat de la figure 6 après découpe laser ou étampage pour réaliser les trous nécessaires à la fixation sur le boîtier de montre et sur la boucle.
La figure 15 représente une boîte de montre avec un système de cornes pour accrocher le bracelet.
La figure 16 représente une boucle de fermeture à fixer au bracelet avec un système de barrette.
La figure 17 représente une montre avec un bracelet bicolore avec la couleur de la face intérieure différente de la couleur de la face extérieure.
La figure 18 représente un brin de bracelet noir avec des bandes phosphorescentes obtenu par le procédé de co-extrusion décrit dans l'invention. Une première vue est une vue en coupe longitudinale du brin de bracelet et la seconde vue est une vue du dessus du brin de bracelet.

### DESCRIPTION DÉTAILLÉE DE L'INVENTION

La présente invention se rapporte à un procédé de fabrication de bracelets pour montres ou de bijoux fantaisies par extrusion de matière plastique.

Le procédé peut consister à fabriquer un extrudat ayant une largeur correspondant à la largeur du bracelet ou à fabriquer un extrudat ayant une largeur correspondant à la longueur d'un brin ou des deux brins du bracelet.

Le bracelet obtenu avec le procédé selon l'invention a pour caractéristique de présenter un profil original, des rayures de couleurs, y compris des rayures luminescentes, ou des propriétés différentes selon la position. Il peut bien entendu présenter une ou plusieurs de ces caractéristiques.

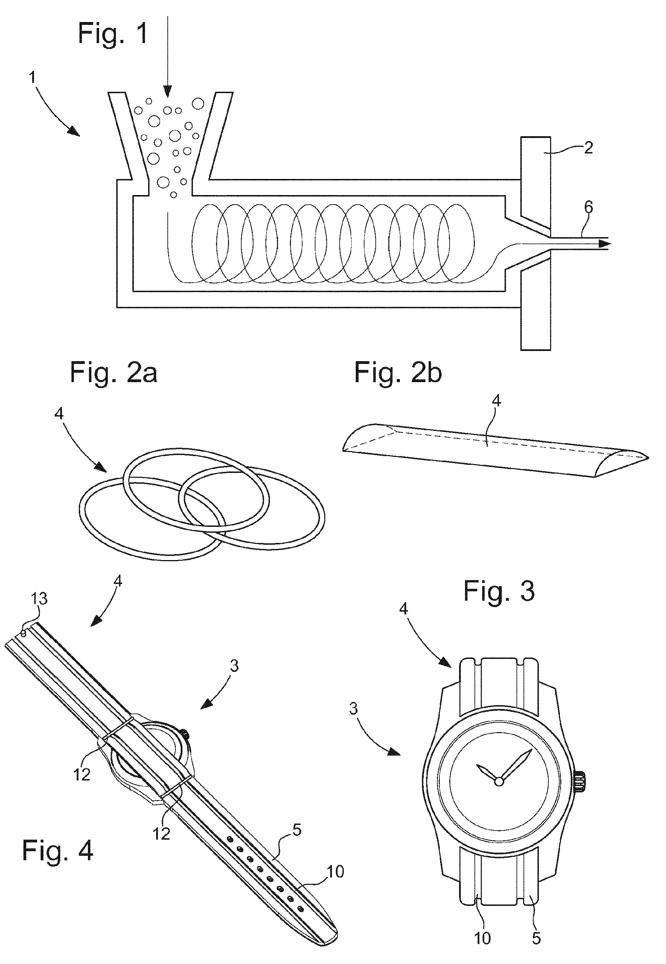

On entend par profil original, un bracelet de section transversale arrondie formant, par exemple, un ovale, un cercle ou un demi-fuseau. A titre d'exemple illustré aux figures 1 et 2a, la filière 2 de la ligne d'extrusion 1 est adaptée pour fabriquer un bracelet 4 formant un tube plein ou creux. A la figure 2b est représenté un bracelet avec un profil formant un demi-fuseau, c.à.d. un profil bombé formé d'un bord plat surmonté par un bord avec un certain rayon de courbure. On entend également par profil original un bracelet présentant sur sa section transversale ou sur sa section longitudinale des motifs tridimensionnels formés de zones en relief, qu'on qualifiera de zones en saillie. Par exemple, le bracelet 4 issu du procédé peut être formé de bandes longitudinales en saillie 5 séparées par une ou plusieurs creusures 10 comme représenté aux figures 3 et 4. De nombreux profils sont imaginables avec un profil symétrique ou non symétrique par rapport respectivement à l'axe longitudinal ou transversal du bracelet. La ou les zones en saillie peuvent s'étendre longitudinalement ou transversalement selon que le procédé d'extrusion consiste à fabriquer un extrudat de largeur correspondant à la largeur du bracelet ou un extrudat de largeur correspondant à la longueur d'un brin ou des deux brins du bracelet.

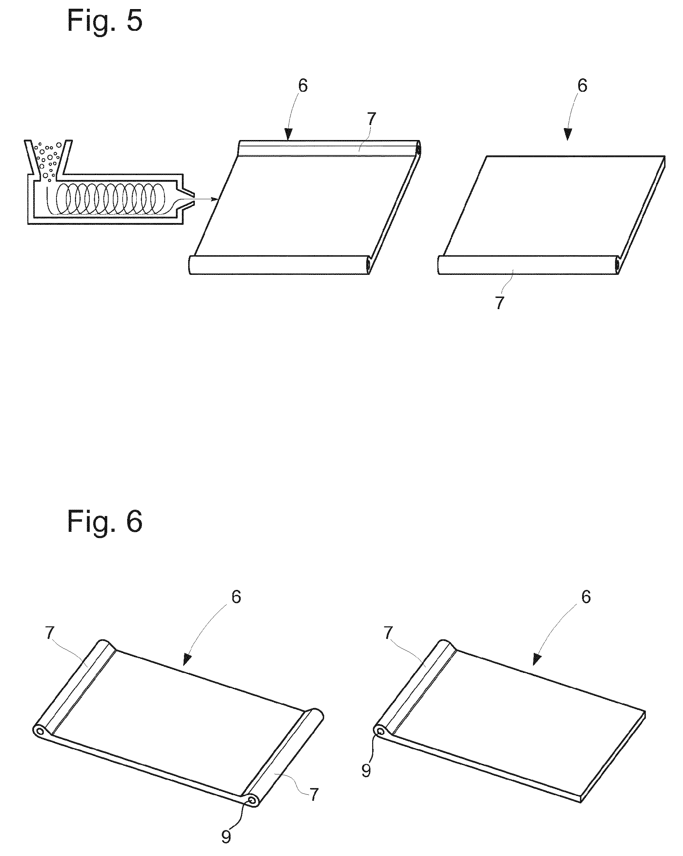

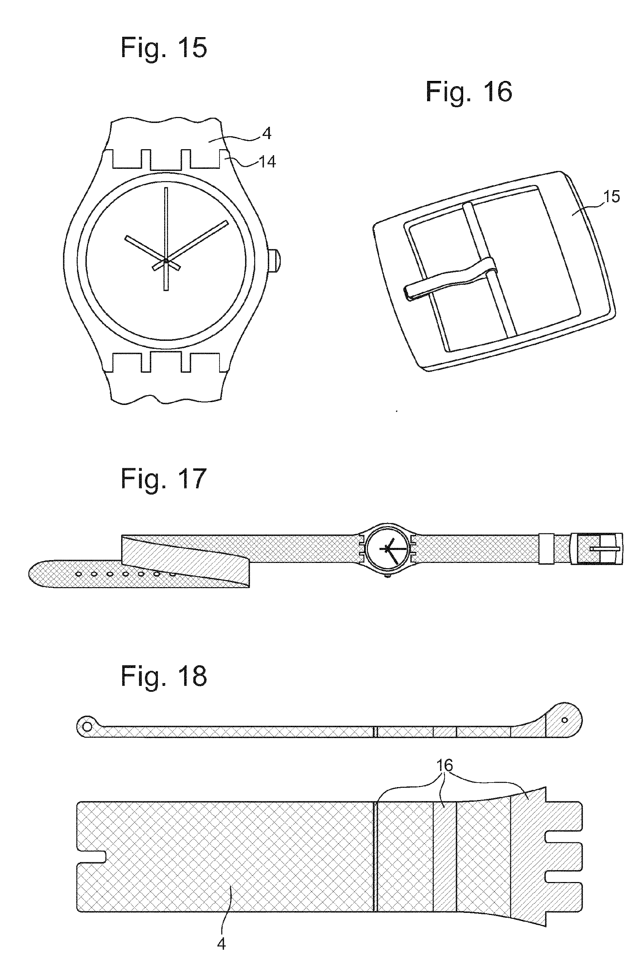

Pour faciliter l'assemblage ultérieur du bracelet au boîtier de montre, il est avantageux de fabriquer un extrudat 6 de largeur correspondant à la longueur d'un brin avec à une ou à chaque extrémité latérale de l'extrudat une structure tubulaire creuse en saillie 7 comme représenté aux figures 5 et 6. Les structures tubulaires creuses forment des trous débouchants 9 destinés à recevoir respectivement une barrette permettant l'accroche à une boîte de montre avec des cornes 14 comme montré à la figure 15 et à une boucle 15 comme montré à la figure 16. Il est également envisageable de réaliser un extrudat 6 possédant à une seule extrémité latérale une structure tubulaire creuse en saillie 7. Dans ce cas, cette dernière forme un trou débouchant destiné à recevoir la barrette permettant l'accroche à la boîte de montre avec des cornes 14 (figure 15). Il est en outre envisageable de réaliser les deux brins du bracelet partant d'une seule bande avec une structure tubulaire à une extrémité latérale et deux structures tubulaires situées à proximité du centre de la bande et d'effectuer ultérieurement les découpes nécessaires pour obtenir les deux brins.

On a décrit ci-dessus les profils originaux qui peuvent être obtenus grâce au procédé d'extrusion selon l'invention. Grâce à ce procédé, il est en outre aisé de combiner au sein du bracelet plusieurs matières qui se distinguent par leurs couleurs et/ou leurs propriétés.

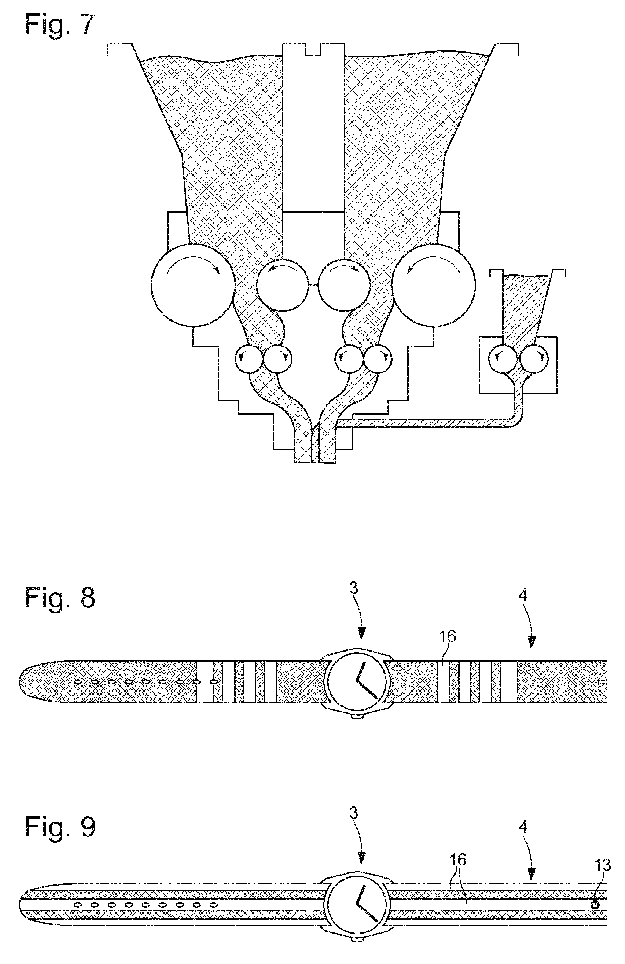

Ainsi, des bracelets présentant dans la masse une alternance de bandes 16 de couleurs différentes peuvent être réalisés par co-extrusion (figures 7 à 9). Comme précédemment, les bandes 16 peuvent s'étendre longitudinalement ou transversalement selon que l'extrudat a une largeur correspondant à la largeur ou à la longueur du bracelet. On entend également par bandes de couleurs des bandes luminescentes s'étendant dans le sens transversal ou longitudinal. Ainsi, la figure 18 illustre l'invention pour un bracelet présentant dans la masse trois bandes 16 phosphorescentes transversales. Le bracelet co-extrudé bi-couleur et bi-matière a été réalisé en polyuréthanes thermoplastiques (TPU) partant de deux machines d'extrusion solidarisées, avec une tête commune de co-extrusion. Une première machine est utilisée pour l'alimentation de la matière A et une seconde machine pour l'alimentation de la matière photoluminescente B. Les deux matières thermoplastiques sont ainsi acheminées dans l'outillage filière et poinçon permettant une répartition maitrisée des deux flux de matières. La répartition des deux flux de matières premières est donnée par l'outillage, les petites évolutions dimensionnelles étant modulées avec les paramètres machines (vitesse de tirage, températures de vis/fourreau, débit matière, vitesse de rotation des vis, etc...). Il est évidemment envisageable de solidariser une troisième machine avec une nouvelle tête de co-extrusion acceptant trois alimentations différentes pour co-extruder ce même type de bracelet en tri-matière et/ou en tri-couleur.

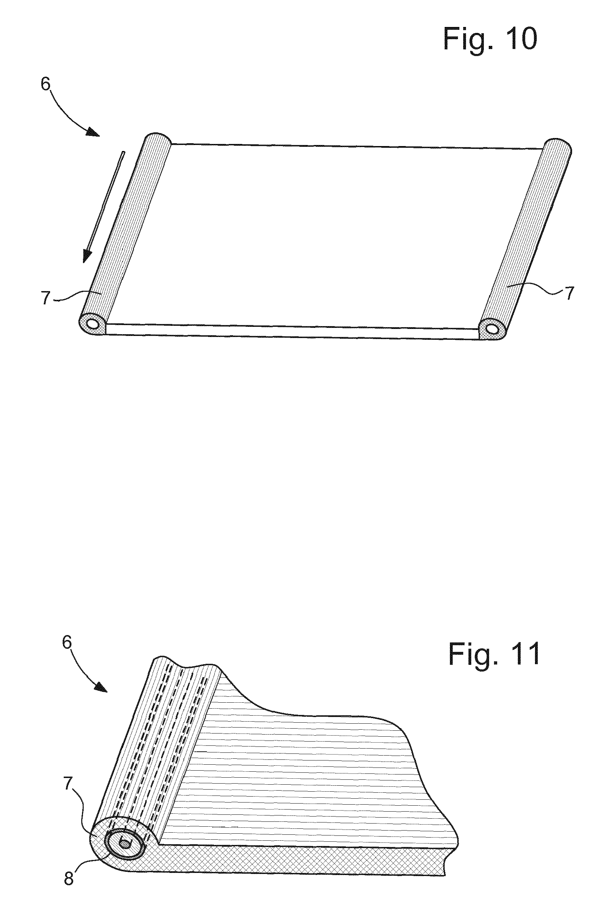

Il est également possible d'obtenir par ce procédé de co-extrusion, un bracelet bicolore avec une couleur du dessus différente de la couleur du dessous en contact avec la peau (figure 17). Des matières présentant des caractéristiques physiques différentes peuvent également être co-extrudées pour moduler les propriétés selon les zones du bracelet. Dans le cas d'un extrudat de largeur correspondant à la longueur d'un brin comme représenté à la figure 10, il est particulièrement avantageux d'introduire aux extrémités latérales de la filière de co-extrusion une matière plastique présentant des propriétés mécaniques supérieures car ces zones d'attache au boîtier et à la boucle sont particulièrement sollicitées mécaniquement. A titre d'exemple, la matière centrale peut comporter un thermoplastique avec une dureté shore A de 55 et les extrémités latérales un thermoplastique avec une dureté shore A de 75. La co-extrusion permet en outre de réaliser des bracelets présentant une matière de dessous différente de la matière du dessus. On peut notamment obtenir un bracelet avec une doublure confortable au toucher doux sur le dessous et un fini brillant sur le dessus. Selon un autre exemple, le bracelet peut comporter deux matériaux co-extrudés avec un premier matériau conférant des propriétés antibactériennes et/ou anti-transpirantes à la face intérieure du bracelet et un deuxième matériau conférant un fini esthétique particulier à la face extérieure du bracelet.

Selon un autre mode de réalisation, un renfort 8 peut être intégré lors de l'extrusion pour simuler le fil de couture, apporter résistance et rigidité à la matière plastique dans certaines zones, ou simplement créer un décor. Le renfort peut se présenter sous forme de câbles, de tubes, de fils ressorts en carbone ou autre matériau d'origine synthétique, naturelle, métallique ou minérale. Par exemple, un tube 8 métallique ou textile peut être intégré au niveau d'une ou des structures tubulaires 7 creuses, et, cela, toujours dans le but de renforcer cette partie fragile du bracelet (figure 11).

Selon un autre mode de réalisation, la matière plastique peut être extrudée pour enrober une bande, par exemple, métallique. Plus précisément, la bande métallique peut être une bande ressort bistable en acier pour fabriquer un bracelet type "Slap Wrap". Le revêtement par extrusion d'une bande permet de combiner l'aspect confort et coloré du plastique en surface avec une tenue rigide apportée par la bande à coeur et d'envisager ainsi des systèmes de bracelets de montres sans fermoir.

Selon l'invention, les matières synthétiques utilisées lors de l'extrusion ou de la c-oextrusion sont des mélanges comprenant au moins un polymère thermoplastique. Préférentiellement, le mélange comprend moins un élastomère thermoplastique (TPE) choisi parmi la liste suivante:
- TPE-O - Oléfines thermoplastiques
- TPE-S - plus particulièrement les composés SBS, SEBS ou SEPS styrénique
- TPE-V - plus particulièrement les composés PP/EPDM vulcanisé ou les composés TPSi-V (combinaison de thermoplastique et de silicone réticulé)
- TPE-E - Composé de copolyester
- TPE-U - Polyuréthane thermoplastique
- TPE-A - Polyamide thermoplastique
- Résines ionomères.

De préférence, la matière choisie a une dureté shore A comprise entre 55 et 75, des zones de dureté différente pouvant être combinées afin d'améliorer le confort et l'ergonomie du bracelet comme déjà mentionné.

En outre, la ou les matières choisies pour la mise en oeuvre du procédé selon l'invention peuvent comporter des charges pour améliorer le confort, l'aspect esthétique et la stabilité dans le temps du bracelet :
- Exemples de charges pour améliorer le confort :
   - Céramiques type nitrure de bore hexagonal pour évacuer l'énergie calorifique et diminuer la sudation ;
   - Fibres textiles ayant un effet capillaire afin d'évacuer la sueur ;
   - Agents antibactériens comme les particules d'argent ou de pyrithione de zinc ou sels d'aluminium pour un effet anti-odeur ;
- Exemples d'additifs pour créer des effets esthétiques intéressants :
   - Pigments colorés ou colorants, composés ayant des propriétés fluorescentes, phosphorescentes, thermochromiques ou photochromiques ;
- Exemples d'additifs pour améliorer la stabilité dans le temps du bracelet :
   - Additifs anti-UV.

Ces charges et additifs peuvent être ajoutés dans la trémie d'alimentation de la vis de l'extrudeuse ou avoir été préalablement intégrés dans la matière. Toujours dans un esprit de moduler les propriétés au sein du bracelet, il est évidemment envisageable dans le cas de la co-extrusion de n'introduire les charges et additifs que dans certaines des matières extrudées.

Après fabrication du bracelet par extrusion, des étapes additionnelles de découpe peuvent être réalisées pour faciliter la fixation du bracelet au boîtier de montre dans le cas d'une application en horlogerie ainsi que pour intégrer le fermoir.

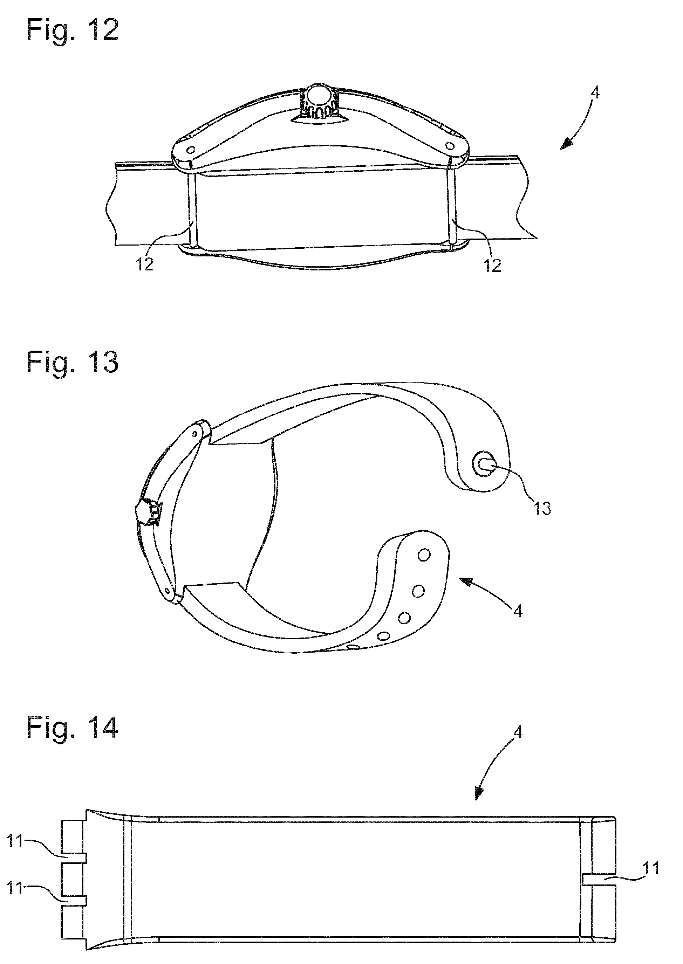

Dans le cas des bracelets issus du procédé d'extrusion dans le sens longitudinal du bracelet, la forme du bracelet et les trous désirés sont obtenus par exemple par étampage ou par découpe laser. La bande obtenue après extrusion peut être d'une seule pièce et attachée au boîtier de montre à l'aide de passants 12 disposées de chaque côté du boîtier de montre comme représenté à la figure 12 ; il s'agit d'une construction dite NATO. Selon une variante, un brin court et un brin long sont découpés dans la bande plastique afin de réaliser un bracelet classique. Une opération de surmoulage par compression est alors nécessaire pour créer les inserts, semblables aux structures tubulaires de la figure 6. Il est également envisageable d'introduire un système de fermoir à clous 13 qui se loge dans un trou du bracelet (figure 13). Il est aussi envisageable de réaliser un bracelet sans fermoir comme pour les bracelets rigides tubulaires de la figure 2a. Dans ce cas, les extrémités libres de la bande sont fusionnées notamment par un procédé de fusion par ultrasons, chauffage infrarouge ou laser.

Dans le cas des bracelets issus du procédé d'extrusion dans le sens transversal du bracelet, l'assemblage au boîtier de montre est plus facile à réaliser. Par découpe laser ou étampage au niveau des structures tubulaires, les accroches 11 respectives pour le boîtier de montre et pour la boucle sont réalisées comme montré à la figure 14. D'autres moyens de fixation au boîtier et de fermeture tels que décrits ci-dessus sont également envisageables.

Les bracelets ainsi réalisés par extrusion présentent de nombreux avantages. Le procédé est simple et peu coûteux tout en assurant une cadence de production élevée. Des bracelets multicolores teintés dans la masse avec des bandes nettes peuvent être obtenus contrairement au procédé actuel d'injection. Toutes les géométries sont envisageables. Il est en outre encore possible d'agrémenter la surface du bracelet d'ornements additionnels tels qu'une couture ou un décor par impression jet d'encre, tampographie, etc.

### Légende

(1) Ligne d'extrusion
(2) Filière
(3) Montre
(4) Bracelet
(5) Zones en saillie
(6) Extrudat
(7) Structure tubulaire creuse
(8) Renfort ou décor, par exemple, sous forme de fil, tube, bande.
(9) Trou débouchant pour la fixation au boîtier de montre et à la boucle de fermeture.
(10) Creusure
(11) Découpe ou accroche
(12) Passant
(13) Fermoir à clous
(14) Corne
(15) Boucle
(16) Bande de couleur ou luminescente

## Revendications

1. Procédé de fabrication d'un bracelet (4) de montre (3) ou de bijou comportant les étapes de :
- mise à disposition d'un premier matériau synthétique,
- mise à disposition d'une ligne d'extrusion (1) avec une filière (2) pour fabriquer un extrudat (6) à partir du premier matériau,
**caractérisé en ce qu'**il comporte au moins une des étapes suivantes :
- mise à disposition d'un ou plusieurs matériaux additionnels se distinguant du premier matériau par leurs couleurs et/ou leurs propriétés,
- mise à disposition d'une filière (2) ayant un profil particulier sélectionné parmi un profil circulaire, un profil ovale, un profil bombé et un profil avec des zones en saillie (5).

2. Procédé selon la revendication 1, dans lequel l'extrudat (6) a une largeur correspondant à la largeur du bracelet (4) ou à la longueur d'un ou deux brins du bracelet (4).

3. Procédé selon la revendication 1 ou 2, dans lequel un ou plusieurs des matériaux additionnels est un matériau synthétique co-extrudé avec le premier matériau.

4. Procédé selon l'une quelconque des revendications précédentes, dans lequel un ou plusieurs des matériaux additionnels est un décor ou un renfort (8) intégré lors de l'extrusion au travers de la filière (2).

5. Procédé selon la revendication 4, dans lequel le décor ou renfort (8) est un fil, une bande ou un tube.

6. Procédé selon la revendication 4 ou 5, dans lequel le décor ou renfort (8) est formé de fibres ou réalisé dans un matériau métallique.

7. Procédé selon l'une quelconque des revendications 4 à 6, dans lequel le renfort (8) est intégré au niveau d'une ou des deux extrémités latérales de la filière (2) lorsque l'extrudat (6) a une largeur correspondant à la longueur d'un ou deux brins du bracelet (4).

8. Procédé selon l'une quelconque des revendications 4 à 6, dans lequel le renfort (8) est intégré au coeur de la filière (2) afin de fabriquer un bracelet (4) avec une enveloppe plastique enrobant le renfort (8).

9. Procédé selon l'une quelconque des revendications précédentes, dans lequel la filière (2) présente à une ou deux extrémités latérales un profil tubulaire creux (7) faisant saillie par rapport au reste du profil de la filière (2).

10. Procédé selon la revendication 9, comprenant une étape de découpe laser ou d'étampage de l'extrudat (6) issu de la filière (2) pour former les accroches (11) respectives à un boîtier de montre et à une boucle (15) de fermeture.

11. Procédé selon l'une quelconque des revendications précédentes, dans lequel le premier matériau et, éventuellement un ou plusieurs matériaux additionnels, comporte une charge améliorant les performances mécaniques, le confort, la stabilité dans le temps et/ou l'aspect esthétique du bracelet (4).

12. Procédé selon la revendication 11, dans lequel la charge est sélectionnée parmi le groupe composé de particules céramiques, d'agents antibactériens tels que des particules d'argent ou des particules de pyrithione de zinc ou de sels d'aluminium, de fibres textiles, de composés anti-UV, de pigments, de composés fluorescents, de composés phosphorescents, de composés thermochromiques, de composés photochromiques et d'un mélange de ceux-ci.

13. Bracelet (4) de montre ou de bijou, ou bijou obtenu à l'aide du procédé selon l'une quelconque des revendications précédentes.

14. Bracelet ou bijou (4) selon la revendication 13, comportant des bandes (16) transversales ou longitudinales de couleurs différentes teintées dans la masse.

15. Bracelet (4) selon la revendication 13 ou 14, comportant dans la masse des bandes (16) luminescentes transversales ou longitudinales.

16. Bracelet (4) selon l'une quelconque des revendications 13 à 15, comportant une face intérieure et une face extérieure composées de matériaux différents.

17. Bracelet (4) selon l'une quelconque des revendications 13 à 16, comportant des composés ayant des propriétés antibactériennes, anti-odeur, anti-sudation, de protection anti-UV, phosphorescentes, fluorescentes, thermochromiques et/ou photochromiques.

18. Bracelet (4) selon l'une quelconque des revendications 13 à 17, comportant un renfort (8) disposé à une extrémité, à ses extrémités ou au milieu de son épaisseur.

19. Bracelet (4) selon l'une quelconque des revendications 13 à 18, comportant à une ou à ses extrémités un matériau plastique différent de par ses propriétés mécaniques du matériau plastique disposé entre les extrémités.

20. Bracelet (4) selon l'une quelconque des revendications 13 à 19, comportant des zones de dureté différentes avec une dureté shore A comprise entre 55 et 75.

21. Montre (3) ou bijou comportant un bracelet (4) selon l'une quelconque des revendications 13 à 20.
